(19) Europäisches Patentamt
European Patent Office
Office européen des brevets

(11) **EP 0 855 412 A2**

(12) **EUROPÄISCHE PATENTANMELDUNG**

(43) Veröffentlichungstag:
**29.07.1998 Patentblatt 1998/31**

(51) Int. Cl.⁶: **C08F 26/06**

(21) Anmeldenummer: 98100438.5

(22) Anmeldetag: **13.01.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **24.01.1997 DE 19702476**

(71) Anmelder:
**BASF AKTIENGESELLSCHAFT**
**67056 Ludwigshafen (DE)**

(72) Erfinder:
• **Blankenburg, Rainer, Dr.**
  **67067 Ludwigshafen (DE)**
• **Neubecker, Karin, Dr.**
  **67227 Frankenthal (DE)**

(54) **Verfahren zur Herstellung von Polymerisaten des N-Vinylcaprolactams**

(57)     Die Erfindung betrifft ein Verfahren zur Herstellung von Polymerisaten des N-Vinylcaprolactams durch Polymerisation von

A) 40 - 100 Gew.-% N-Vinylcaprolactam und

B) 0 - 60 Gew.-% eines weiteren monoethylenisch ungesättigten, mit N-Vinylcaprolactam copolymerisierbaren Monomeren

sowie Polymere, hergestellt nach diesem Verfahren.

EP 0 855 412 A2

**Beschreibung**

Die vorliegende Erfindung betrifft ein Verfahren zur Herstellung von Polymerisaten des N-Vinylcaprolactams, Polymerisate, hergestellt nach diesem Verfahren, sowie die Verwendung der Polymerisate.

Aus der DE 43 42 281 A1 ist ein Verfahren zur Herstellung von pulverförmigen Polymerisaten auf Basis von N-Vinylcaprolactam bekannt, bei dem dies oder die Monomere in wäßrigen Medium oder in $CH_3OH$ polymerisiert werden, wobei im Falle von $CH_3OH$ dieses anschließend gegen $H_2O$ ausgetauscht wird. Die Herstellung eines von organischen Lösungsmitteln freien nach Trocknung pulverförmigen Polymerisats ist für den gemäß DE 43 42 281 A1 vorgesehenen Einsatzzweck, die Haarkosmetik, erforderlich. Nach dem in DE 43 42 281 A1 offenbarten Verfahren können Polymerisate mit niedrigem K-Wert nur mit MG-Reglern hergestellt werden.

Aus den Druckschriften DE 24 56 807 C3, DE 25 14 127 B2 und DE 24 39 196 sind Verfahren zur Herstellung von Polyvinylpyrrolidon bekannt, bei denen durch bestimmte Verfahrensbedingungen, wie z. B. dem Einsatz von Coaktivatoren, bestimmten Zugabebedingungen oder Drücken bzw. Verweilzeiten Polymerisate mit niedrigen K-Werten, geringen Restmonomerengehalt und hohen Anforderungen für pharmazeutische oder kosmetische Anwendungen (frei von Verunreinigungen) erhalten werden.

Aus der WO 95/32 356 sind Additive zur Kontrolle von Clathrathydraten in flüssigen Systemen bekannt. Als Additive werden im Handel erhältliche Polymere eingesetzt. Polyvinylcaprolactame sind neben anderen Polymeren genannt.

Aufgabe der vorliegenden Erfindung war es, ein Verfahren zur Herstellung von Polymerisaten auf Basis von N-Vinylcaprolactam zur Verfügung zu stellen, mit dem Polymerisate mit niedrigem K-Wert erhältlich sind, wobei die Ausbeuten hoch sein und Spurenverunreinigungen niedrig bleiben sollen.

Demgemäß wurde das eingangs bezeichnete Verfahren zur Herstellung von Polymerisaten des N-Vinylcaprolactams durch Polymerisation von

A) 40 - 100 Gew.-% N-Vinylcaprolactam und

B) 0 - 60 Gew.-% eines weiteren monoethylenisch ungesättigten, mit N-Vinylcaprolactam copolymerisierbaren Monomeren gefunden, das

dadurch gekennzeichnet, daß man die Monomere A und B in einem Lösungsmittel mit einem Peroxid, das bei 95°C eine Halbwertszeit der Zersetzung von mindestens 10 h aufweist, bei einer Temperatur von 100 bis 200°C polymerisiert.

Vorteilhaft werden als Peroxide Dialkyl-, Diaryl- oder Arylalkylperoxid, Monoalkylhydroperoxide, Dialkyl-diperoxoalkane oder Peroxoester eingesetzt.

Bevorzugt ist, daß die Alkyl-, Aryl- oder Arylalkylgruppen des Peroxids 1 bis 8 C-Atome aufweisen. Die Peroxide können auch als Gemische vorliegen. Bevorzugt ist auch, daß man bei 110 - 160°C polymerisiert.

Die Temperaturen liegen in der Regel oberhalb des Siedepunkts des jeweils verwendeten Lösungsmittels, so daß sich ein Druck von oberhalb 1 bar einstellt. Man kann jedoch auch den Druck in der Reaktionszone dadurch erhöhen, daß man z. B. Stickstoff oder ein anderes inertes Gas aufpreßt. Ein oberer Wert für den Druck, bei dem die Polymerisation durchgeführt wird, kann nicht angegeben werden. Der obere Wert für den Druck ist durch die Auslegung der jeweils verwendeten Apparatur gegeben. Im allgemeinen arbeitet man bei Drücken von 2 bis 20 bar, vorzugsweise 3 bis 10 bar.

Als Lösungsmittel werden bevorzugt gut regelnde Lösungsmittel mit leicht übertragbaren Wasserstoffatomen eingesetzt, insbesondere Alkohole oder Etheralkohole. Diese Lösungsmittel können auch in Gemisch mit $H_2O$ eingesetzt werden.

Als Lösungsmittel seien beispielsweise genannt:

Methanol, Ethanol, Isopropanol, n-Propanol, tertiär-Butanol, n-Butanol, sekundär-Butanol und höhere geradkettige, verzweigte oder zyklische Monoalkohole; Ethylenglykol, Propylenglykol, Glyzerin und höhere geradkettige, verzweigte oder zyklische Di-, Tri- oder polyfunktionelle Alkohole; Diethylenglykol, Triethylenglykol und höhere aus Ethylenoxid und Propylenoxid-einheiten bestehende Homologe; n-Hexan, n-Heptan, Cyclohexan, Isooktan und höhere geradkettige, verzweigte oder zyklische Alkane; Benzol, Toluol, Ethylbenzol, Xylol und höhere Alkylbenzole; Phenol, Kresol, Resorcin und höhere mono- und difunktionelle (Alkyl)benzole; Aceton, Methyl-ethylketon, Acetophenon, Cyclohexanon und höhere geradkettige, verzweigte oder zyklische aliphatische und aromatische Ketone; Dimethylformamid, Dimethylacetamid, N-Methyl-pyrrolidon, N-Ethyl-pyrrolidon, Dimethylsulfoxid und andere übliche organische Lösungsmittel. Prinzipiell ebenfalls geeignet sind natürliche oder synthetische Wachse, Öle, Fette und Emulgatoren die unter den Polymerisationsbedingungen flüssig sind - sowohl als Lösungsmittel für die Monomeren, als auch im Gemisch mit den oben angeführten organischen Lösungsmitteln oder mit Wasser.

Bevorzugt eingesetzte Comonomere sind vollständig oder eingeschränkt wasserlösliche Monomere wie beispielsweise: Acrylamid, Acrylnitril, Methacrylnitril, N,N-Dimethylacrylamid, N-Isopropylacrylamid, N-Vinylpyrrolidon, N-Vinylpiperidon, N-Vinylacetamid, N-Vinylpropionamid, N,N-Methyl-Vinylacetamid, Vinylacetat, Vinylpropionat, Acrylsäure, Methacrylsäure, Methylacrylat, Ethylacrylat, Methylmethacrylat, Vinylpyridin, N-Vinyloxazolinon, Vinylpyridin-N-oxid, Vinylimidazol, Methyl-vinylimidazol, Dimethyl-aminoethyl-(meth)acrylat, Dimethyl-aminopropyl-(meth)acrylat, Dimethyl-aminoethyl-acrylamid, Dimethyl-aminopropyl-acrylamid. Besonders bevorzugt sind Acrylamid und N-Vinylheterocyclen, wie beispielweise N-Vinylpyrrolidon. Weniger bevorzugt sind wasserunlösliche wie beispielsweise: Verzweigte oder geradkettige $C_3$-$C_{18}$-Alkyl (meth) acrylate, verzweigte oder geradkettige $C_4$-$C_{18}$-Alkyl(meth) acrylamide, verzweigte oder geradkettige $C_4$-$C_{18}$-Carbonsäurevinylester, Styrol.

Als radikalische Polymerisationsinitiatoren werden bevorzugt: Di-tertiär-Butylperoxid, Tertiär-Butylhydroperoxid, Di-tertiär-Amylperoxid, Tertiär-Amylhydroperoxid, Dicumylperoxid, Tertiär-Butyl-cumylperoxid, 2,2-Di-tertiär-Butylperoxy-butan, t-Butylperbenzoat oder 2,5-Dimethylhexan-2,5-di-t-butylperoxid. Besonders vorteilhaft ist Di-tertiär-Butyl-peroxid. Die Initiatorkonzentration liegt im allgemeinen zwischen 0,1 und 30 Gew.-%, vorzugsweise zwischen 0,5 und 15 Gew.%, besonders bevorzugt zwischen 1 und 10 Gew.-%, bezogen auf die Monomeren.

Obwohl Regler zur Erfüllung der erfindungsgemäßen Aufgabe nicht erforderlich sind, können sie zusätzlich eingesetzt werden. Als Regler sind beispielsweise geeignet:
Formaldehyd, Acetaldehyd, Propionaldehyd, n-Butyraldehyd und Isobutyraldehyd, Ameisensäure, Ammoniumformiat, Hydroxylammoniumsulfat, Hydroxylammoniumphosphat, Di-n-butylsulfid, Di-n-octylsulfid, Diphenylsulfid, Diisopropyldisulfid, Di-n-butyldisulfid, Di-n-hexyldisulfid, Diacetyldisulfid, Di-t-butyltrisulfid, n-Butylmercaptan, n-Hexylmercaptan, n-Dodecylmercaptan, Ethylthioglycolat, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Diethanolsulfid, Thiodiglycol, Ethylthioethanol, Thioharnstoff, Allylalkohol, Allylbromid, Benzylchlorid, Chloroform, Tetrachlormethan.

Die Reaktionsmischung kann bereits die Gesamtmenge des radikalischen Polymerisationsinitiators enthalten; man kann jedoch auch den Polymerisationsinitiator an verschiedenen Stellen der Reaktionszone der zu polymerisierenden Mischung zuführen.

Die Durchführung der eigentlichen Polymerisation erfolgt auf folgende Weise: Man kann alle Komponenten des Absatzes in ein geschlossenes System, zweckmäßigerweise einen Druckbehälter, der bis zu 20 bar geprüft ist, vorlegen und die in den Lösungen enthaltene Luft durch Evakuieren oder Durchblasen eines Inertgases entfernen. Dann steigert man die Temperatur auf 100 bis 200°C, vorzugsweise 110 bis 160°C und läßt ca. 3 bis 4 Stunden polymerisieren.

In einer besonders bevorzugten Ausführungsform kann das Monomere während der Polymerisation successive zugegeben werden, wodurch zusätzlich der K-Wert noch mehr gesenkt werden kann. Dieses Zulaufenlassen kann auch in der Weise geschehen, daß Monomer, Lösungsmittel und Peroxid gemischt successive zugefahren werden. Die Zulaufdauer kann zwischen 1 und 5 Stunden betragen.

Nach dem erfindungsgemäßen Verfahren erhält man Polymerisate mit Molgewichten von ca. 1 000 bis 50 000 ($M_w$ bestimmt durch Lichtstreuung), bzw. K-Werten von 8 bis 30. Besonders K-Werte von 8 bis 20 sind möglich, wenn man z.B. die oben genannten Maßnahmen bezüglich der Dosierung ergreift.

Durch laufende Probeentnahme und Bestimmung des restlichen Vinylpyrrolidons läßt sich der Ablauf der Polymerisation leicht verfolgen. Wenn der Restgehalt an Vinylpyrrolidon deutlich unter 0,1 % gefallen ist, kann die Polymerisation abgebrochen werden. Die Nachpolymerisationszeit beträgt im allgemeinen 5 bis 15 Stunden.

Die Erfindung betrifft auch Polymerisate aus 40 - 100 Gew.-% N-Vinylcaprolactam und 0 - 60 Gew.-% eines weiteren monoethylenisch ungesättigten, mit N-Vinylcaprolactam copolymerisierbaren Monomeren, die einen K-Wert von 8 bis 30 aufweisen, hergestellt nach dem erfindungsgemäßen Verfahren.

Nach dem erfindungsgemäßen lassen sich vorteilhaft Polymerisate mit einen $M_w$ von 1000 bis 2800 g/mol herstellen

Überraschend wurde festgestellt, daß sich N-Vinylcaprolactame, obwohl sie über ein instabilen Ringsystem verfügen, mit dem erfindungsgemäßen Verfahren bei 100 - 200°C, bevorzugt bei 110 bis 160°C gut zu Polymerisaten mit niedrigen K-Werten polymerisieren lassen, wobei auch die Ausbeuten hoch sind und Spurenverunreinigungen niedrig bleiben.

Die erfindungsgemäß gergestellten Polymerisate lassen sich für ein Vielzahl von Verwendungszwecken einsetzen, beispielsweise:

Abzieh- und Egalisierhilfsmittel für Textileinfärbung, Albuminkomplexe, Anreicherung/Trennung von (Edel) Metallen, Antioxidantien (Komplexe mit), Aufhellmittel (Textildruck), Aufzeichnungsmedien, Betonzusatzmittel, Bindemittel für den Transferdruck, Charge-Transfer-Kathoden, Coating von Polyolefinen, Coatings, Desinfektions- und Konservierungsmittel, Diazotypien, Dispergierhilfsmittel, Druckfarben, Edelmetall-Kristallisationskeime für Silberfällung, Elektrisch leitende Schichten, Elektrodengele und Hautklebegele, Entfernung polyvalenter Kationen, Entfernung von Tannin/Phenolen, Enzym- und Proteinkomplexe, Erdölgewinnung aus ölhaltigem Wasser, Erhöhung der Benetzbarkeit von Oberflächen, Färben von Polyolefinen, Farbmischungsinhibitoren für photographische, Diffusions-Transfer-Materialien, Farbübertragungsinhibitoren, Festbatterien (z.B. Lithiumbatterien), Festelektrolyte, Fischfuttergranulat, Fixateur für Parfümöle, Flexodruckplatten, Flockungsmittel, Fotografische Prozesse, Fotopapiere, Gasanalytik, Gipsbinden, Glas und -Fasern (Binder, Coating, Schmiermittel), Haftvermittler für Farbstoffe, Hilfsmittel bei der Erdöl- und Erdgasförderung sowie dem Erdöl- und Erdgastransport, Hilfsmittel in der Photoindustrie, Hydrophilisierung von Oberflächen, Immunochemikalien oder als wirkstofffreisetzendes Mittel in pharmazeutischen Zubereitungen, Inhibierung von von Gashydraten bei der Erdgasförderung Ionenaustauscher, Isomerisierungsinhibitor, Jetinks, Tinten und Kugelschreiberpasten, Katalysatoren, Kathedercoating, Keramikbinder, Kesselsteinverhinderer oder Kesselsteinentferner, Klebstoff für Nährböden, Klebrohstoffe, Klebstoffe und Klebestifte, Komplexbildung mit organischen Verbindungen, zur Erhöhung der Adsorbierbarkeit/ Hydrophobie, Komplexe mit anorganischen Verbindungen, Komplexe mit Kalogen, Komplexe mit Metallen/ Metallsalzen, Komplexe mit Polymeren, Konservierungsmittel, Kontaktlinsen, Korrosionsschutz, Kunststoffadditive, Lackhilfsstoffe, Lichtempfindliche Materialien, Lithographie, Löslichkeitsvermittler (Solubilisierung), Luftfilter, Membranherstellung, Metallguß und Metallhärtung, Metallkolloide (Stabilisierung von), Metallkomplexe für revers. Sauerstoffabsorbtion, Metallquenchbäder, Mikroverkapselung, Öl- und Farbstoffentfernung aus Wasser, Ölrückgewinnung, Papierhilfsmittel (Spezialpapiere), Papierstreichfarben, Phasen-Transfer-Katalysatoren, Phenolkomplexe, Photoimaging, Pigmentdispersionen, Protonenleiter (wasserfrei), Reinigungsmittel von Abwässern, Rostverhinderer oder Rostentferner von metallischen Oberflächen, Saatgutbeize und Saatgutcoating, Schmiermitteladditive, Schutzkolloid, Silberhalogenid-Emulsionen, Slow-Release-Düngemittelformulierungen, Reinigungsmittel von Abwässern, Soil Release, Stabilisierung von Peroxiden, Synthetische Fasern, Tanninkomplexe, Tertiäre Erdölgewinnung, Textilhilfsmittel, Tintenstrahl-Aufzeichnungsmedien, Trennung von Kohlenwasserstoffgemischen, Verbessertes Anfärben von Fasern, Verdicker oder Filmbildner in Haarlack-, Haarfestiger- oder Haarsprayadditiven, in hautkosmetischen Zubereitungen, Wärmebeständige Schichten, Wärmeempfindliche Schichten, Wärmeempfindliche Widerstände, Waschmitteladditive, Wasserlösliche Filme, Zigarettenfilter.

Die Erfindung wird anhand der folgenden Beispiele näher erläutert. Die K-Werte wurden nach Fikentscher, Cellulose-Chemie 13, 58-64 und 71-74 (1932) in 5%igen wäßrigen Lösungen bei einer Temperatur von 20°C bestimmt, dabei bedeutet $K = k \cdot 10^3$. Die in den Beispielen angegebenen Molekulargewichte sind Gewichtsmittel und wurden mit einem Kleinwinkellichtstreugerät, Gerät KMX 6, 6-7°, 633 nm gemessen. Die in den Beispielen angegebenen Teile sind Gewichtsteile, die Prozentangaben beziehen sich auf das Gewicht.

Beispiel 1

Es wurde zunächst eine erste Mischung (Zulauf 1) aus 1080 g Vinylcaprolactam, 120 g Acrylamid (als 50%ige Lösung in 120 g $H_2O$) und 360 g $CH_3OH$ hergestellt. In einem Reaktionskessel wurden 165 g des Zulaufs 1, 8,0 g Di-tertiär-Butylperoxid (dtBP) und 450 g $CH_3OH$ dreimal mit 3 bar $N_2$ abgepreßt und dann 0,5 bar $N_2$ aufgepreßt. Die Vorlagen wurde auf 130°C aufgeheizt und der Rest des Zulaufs 1 in 4 h zudosiert. Gleichzeitig wurde ein Zulauf 2 aus 130 g $CH_3OH$ und 8,0 g dtBP in 5 h zudosiert. Nach Zulaufende wurde eine Stunde bei 130°C nachpolymerisiert. Anschließend wurde ein Zulauf 3 aus 81 g $CH_3OH$ und 8,0 g dtBP zugegeben und 10 h bei 130°C nachpolymerisiert. Dann wurde der Kessel abgekühlt, entspannt und die Polymerlösung entnommen.

Die Bedingungen dieses Beispiels und des entsprechend ausgeführten Beispiel 2, 3, 4 und 5 sowie die Eigenschaften der erhaltenen Polymere sind aus der folgenden Tabelle 1 zu entnehmen.

Tabelle 1

|   | Polymer | Lösungsmittel | Startermenge [bezogen auf Monomer] | K-Wert | Rest-VCap [ppm] |
|---|---------|---------------|------------------------------------|--------|------------------|
| 1 | VCap/Acrylamid 90:10 | Methanol | 1,3 Gew.% | 22,5 | 2200 |
| 2 | VCap/Acrylamid 80:20 | Methanol | 1,3 Gew.% | 24,1 | 2300 |
| 3 | VCap/Acrylamid 70:30 | Methanol | 1,3 Gew.% | 22,9 | 450 |
| 4 | VCap/Vinylpyrrolidon 50:50 | Methanol | 0,67 Gew.% | 32,1 | 230 |
| 5 | VCap/Vinylpyrrolidon 50:50 | Methanol | 10 Gew.% | 22,7 | 200 |

Beispiel 6

In einem Reaktionskessel wurden 1800 g $CH_3OH$ und 150 g dtBP dreimal mit 3 bar $N_2$ abgepreßt und dann auf 130°C aufgeheizt. Eine Mischung aus 500 g Vinylpyrrolidon und 1500 g Vinylcaprolactam und eine zweite Mischung aus 200 g $CH_3OH$ und 100 g dtBP wurden in 4 h zudosiert; anschließend wurde 10 h bei 130°C nachpolymerisiert. Dann wurde der Kessel abgekühlt, entspannt und die Polymerlösung entnommen.

Die Bedingungen dieses Beispiels und der entsprechend ausgeführten Beispiele 7, 8, 9 und 10 sowie die Eigenschaften der erhaltenen Polymere sind aus der folgenden Tabelle 2 zu entnehmen.

Tabelle 2

| | Polymer | Lösungsmittel | Starter | K-Wert | Rest-VCap [ppm] |
|---|---|---|---|---|---|
| 6 | VCap/Vinylpyrrolidon 75:25 | Methanol | 12,5 Gew.% | 14,1 | 110 |
| 7 | VCap/Vinylpyrrolidon 75:25 | Isopropanol | 11,5 Gew.% | 11,7* | 530 |
| 8 | VCap/Vinylpyrrolidon 75:25 | Isopropanol | 28 Gew.% | 10,9** | 1110 |
| 9 | VCap/Vinylpyrrolidon 50:50 | Methanol | 12,5 Gew.% | 13,3 | 760 |
| 10 | VCap/Vinylpyrrolidon 50:50 | Methanol | 12,5 Gew.% | 15,4 | 1030 |

\* $M_w$: 2 500 g/mol (Lichtstreuung)
\*\* $M_w$: 1 200 g/mol (Lichtstreuung)

Beispiel 11

Es wurde zunächst eine Mischung (Zulauf 1) aus 2 500 g Vinylcaprolactam und 400 g $CH_3OH$ hergestellt.

In einem Reaktionskessel wurden 400 g des Zulaufs 1, 1 900 g $CH_3OH$ und 170 g dtBP dreimal mit $N_2$ abgepreßt und dann 0,5 bar $N_2$ aufgepreßt. Diese Vorlage wurde auf 130°C aufgeteilt und der Rest von Zulauf 1 in 2 h und ein Zulauf 3 aus 250 g $CH_3OH$ und 80 g dtBP in 4 h zudosiert. Nach Zulaufende wurde 10 h bei 130°C nachpolymerisiert und wie in Beispiel 1 angegeben aufgearbeitet.

Die Bedingungen dieses Beispiels und der entsprechend ausgeführten Beispiele 12 - 16 sind in der nachfolgenden Tabelle 3 angegeben.

Tabelle 3

| | Polymer | Lösungsmittel | Starter | K-Wert | Rest-VCap [ppm] |
|---|---|---|---|---|---|
| 11 | Polyvinylcaprolactam | Methanol | 10 Gew.% | 15,0 | 480 |
| 12 | Polyvinylcaprolactam | Methanol | 10 Gew.% | 16,8 | 1130 |
| 13 | Polyvinylcaprolactam | Isopropanol | 3,2 Gew.% | 15,4 | 1700 |
| 14 | Polyvinylcaprolactam | Isopropanol | 3,2 Gew.% | 15,2 | <50 |
| 15 | VCap/Vinylpyrrolidon 50:50 | Isopropanol | 3,2 Gew.% | 17,2 | <50 |
| 16 | VCap/Vinylpyrrolidon 50:50 | Isopropanol | 4,0 Gew.% | 16,1 | <50 |

## Patentansprüche

1. Verfahren zur Herstellung von Polymerisaten des N-Vinylcaprolactams durch Polymerisation von

   A) 40 - 100 Gew.-% N-Vinylcaprolactam und

   B) 0 - 60 Gew.-% eines weiteren monoethylenisch ungesättigten, mit N-Vinylcaprolactam copolymerisierbaren Monomeren

   dadurch gekennzeichnet, daß man die Monomere A und B in einem Lösungsmittel mit einem Peroxid, das bei 95°C eine Halbwertszeit der Zersetzung von mindestens 10 h aufweist, bei einer Temperatur von 100 bis 200°C polymerisiert.

2. Verfahren nach Anspruch 1, dadurch gekennzeichnet, daß als Peroxid Dialkyl-, Diaryl- oder Arylalkylperoxid, Monoalkylhydroperoxide, Dialkyl-diperoxoalkane oder Peroxoester eingesetzt wird.

3. Verfahren nach Anspruch 1, dadurch gekennzeichnet, daß die Alkyl-, Aryl- oder Arylalkylgruppen des Peroxids 1 bis 8 C-Atome aufweisen.

4. Verfahren nach Anspruch 1, dadurch gekennzeichnet, daß man bei 110 - 160°C polymerisiert.

5. Verfahren nach Anspruch 1, dadurch gekennzeichnet, daß man als Lösungsmittel stark regelnde Lösungsmittel mit leicht übertragbaren Wasserstoffatomen einsetzt.

6. Verfahren nach Anspruch 1, dadurch gekennzeichnet, daß man als Comonomer einen N-Vinylheterocyclus oder Acrylamid einsetzt.

7. Verfahren nach Anspruch 4, dadurch gekennzeichnet, daß man als Lösungsmittel einen Alkohol, oder Etheralkohol einsetzt.

8. Verfahren nach Anspruch 6, dadurch gekennzeichnet, daß man als Lösungsmittel Isopropanol, Methanol und Ethylenglykol einsetzt.

9. Polymerisate aus 40 - 100 Gew.-% N-Vinylcaprolactam und 0 - 60 Gew.-% eines weiteren monoethylenisch ungesättigten, mit N-Vinylcaprolactam copolymerisierbaren Monomeren, die einen K-Wert von 8 bis 30 aufweisen, hergestellt nach dem Verfahren gemäß Anspruch 1.